(19) **Europäisches Patentamt**

**European Patent Office**

**Office européen des brevets**

(11) Veröffentlichungsnummer: **0 071 007**
**B1**

(12) # EUROPÄISCHE PATENTSCHRIFT

(45) Veröffentlichungstag der Patentschrift:
**08.10.86**

(51) Int. Cl.⁴: **G 01 P  3/36,** H 01 S  3/083

(21) Anmeldenummer: **82105087.9**

(22) Anmeldetag: **10.06.82**

(54) **Laser-Drehgeschwindigkeitsmesser.**

(30) Priorität: **13.06.81  DE 3123518**
**19.11.81  DE 3145703**

(43) Veröffentlichungstag der Anmeldung:
**09.02.83 Patentblatt 83/6**

(45) Bekanntmachung des Hinweises auf die Patenterteilung:
**08.10.86 Patentblatt 86/41**

(84) Benannte Vertragsstaaten:
**CH FR GB IT LI SE**

(56) Entgegenhaltungen:
**DE - A - 2 432 479**
**GB - A - 2 020 842**
**US - A - 3 545 866**
**US - A - 3 752 586**
**US - A - 3 851 973**
**US - A - 4 225 239**

(73) Patentinhaber: **TELDIX GmbH, Grenzhöfer
Weg 36 Postfach 105608, D-6900 Heidelberg 1 (DE)**

(72) Erfinder: **Kranz, Jakob, Prof. Dr., Unistrasse,
D-4000 Düsseldorf (DE)**
Erfinder: **Baron, Klaus Uwe, Dr. rer. nat.,
Turnerstrasse 11, D-6900 Heidelberg (DE)**
Erfinder: **Kaiser, Joachim, Dipl.-Phys., Unistrasse,
D-4000 Düsseldorf (DE)**
Erfinder: **Wiegemann, Hans-Bertram, Dr. rer. nat., Dr.
Hermann-Braun-Strasse 16, D-6905 Schriesheim (DE)**

(74) Vertreter: **Kammer, Arno, Dipl.-Ing., TELDIX GmbH
Postfach 10 56 08 Grenzhöfer Weg 36,
D-6900 Heidelberg 1 (DE)**

## Beschreibung

Die Erfindung betrifft einen Laser-Drehgeschwindigkeitsmesser nach dem Oberbegriff des Anspruchs 1.

Es ist bekannt, dass mit Laser-Drehgeschwindigkeitsmessern inertiale Drehgeschwindigkeiten gemessen werden können, indem man die Frequenzdifferenz zwischen den sich gegensinnig ausbreitenden elektromagnetischen Wellen bestimmt. Es ist weiterhin bekannt, dass bei Eingangsdrehgeschwindigkeiten, die einen bestimmten Schwellwert unterschreiten, diese Frequenzdifferenz verschwindet und damit der Drehgeschwindigkeitsmesser seine Fähigkeit, kleine Drehgeschwindigkeiten zu messen, verliert. Diese Erscheinung wird als Lock-In-Effekt bezeichnet. Zur Umgehung des Lock-In-Effekts wurden verschiedene Massnahmen entwickelt, die im Prinzip alle darauf beruhen, dem Ringlaser eine Nullfrequenzaufspaltung aufzuzwingen, oder – mit anderen Worten – seinen Arbeitspunkt an eine Stelle ausserhalb des Lock-In-Bandes zu verlegen.

Eine dieser Massnahmen besteht in der Anwendung des magneto-optischen Kerreffekts. Hierbei wird dem Licht bei der Reflexion an der Grenzfläche zweier Medien, von denen mindestens eines gyrotrop sein, d.h. den magneto-optischen Kerreffekt bewirken muss, ein nichtreziproker (d.h. richtungsabhängiger) Phasensprung aufgezwungen.

Zwischen den sich gegensinnig ausbreitenden Wellen eines solchen Drehgeschwindigkeitsmessers wird demnach eine Phasensprungdifferenz erzeugt, die gemäss der Beziehung

$$\Delta v = \frac{\Delta \Phi}{2\pi} \cdot \frac{c}{L}$$

zu der oben angeführten gewünschten Nullfrequenzaufspaltung führt. Hierin bedeuten:

$\Delta v$ = Frequenzdifferenz
$\Delta \Phi$ = Phasensprungdifferenz
$c$ = Lichtgeschwindigkeit
$L$ = Länge des Umlaufwegs

Eine entsprechende Anordnung ist aus der US-A-4 225 239 bekannt. Dort ist zusätzlich zu den üblichen Eckspiegeln ein magneto-optischer Metallspiegel in den Strahlengang eingebracht, auf den die Strahlen streifend auffallen.

Ein solcher Magnetspiegel muss neben einer ausreichenden Kerrwirkung auch ein ausreichend hohes Reflexionsvermögen besitzen, um als Resonatorspiegel dienen zu können. Diese beiden Forderungen verhindern die Anwendung reiner Metallspiegel aus ferromagnetischem Material, da sie zwar eine ausreichende Kerrwirkung, aber kein für die genannte Anwendung ausreichendes Reflexionsvermögen besitzen (typische Reflexionswerte liegen zwischen 40 und 70%). Zur Abhilfe wird in der US-A-4 225 239 gelehrt, das Reflexionsvermögen der reinen Metallfläche durch Aufbringen von dielektrischen Schichten zu erhöhen. Dies vermindert jedoch nicht unerheblich die Kerrwirkung eines solchen Spiegels, da aufgrund der Reflexion in den dielektrischen Schichten nur noch ein Bruchteil der einfallenden elektromagnetischen Welle bis zur magnetisierten Schicht gelangt. Der in der DE-A-2 432 479 u.a. ebenfalls beschriebene Aufbau eines Kerrspiegels aus einer abwechselnden Folge von Viertelwellenlängenschichten eines dielektrischen und eines ferromagnetischen Materials hat sich als technisch schwer realisierbar herausgestellt. Zur Umgehung dieser technischen Schwierigkeiten wird in der DE-A-2 919 590 gelehrt, eine gyrotrope Granatschicht vor einem dielektrischen Schichtsystem anzuordnen. Zum Aufbau eines solchen Spiegels ist jedoch eine Platte aus einem nichtmagnetisierten Granatmaterial erforderlich, auf deren strahlabgewandter Seite die gyrotrope Schicht und die nachfolgenden dielektrischen Schichten geeignet aufgebracht werden. Daher sind trotz Antireflexionsbeschichtung an der strahlzugewandten Seite Reflexionsverluste nicht zu umgehen, ebenso wie Absorptionsverluste im Granatmaterial selbst.

Ein weiterer Nachteil aller bisher vorgeschlagenen Kerrspiegel besteht darin, dass zur Aufrechterhaltung der notwendigen Polarisationszustände der elektromagnetischen Strahlung zusätzlich besondere Vorkehrungen im Resonator getroffen werden müssen.

Weiterhin ist die Herstellung von dielektrischen Schichtsystemen mit hohem Reflexionsgrad für p-polarisiertes Licht, wie es beispielsweise beim magneto-optischen Kerreffekt mit transversaler Richtung des Magnetfeldes verwendet wird (Magnetfeldvektor senkrecht zur Strahleinfallsebene) schwieriger als für beispielsweise s-polarisiertes Licht.

Die der Erfindung zugrundeliegende Aufgabe besteht darin, einen Laser-Drehgeschwindigkeitsmesser mit einem Element zu schaffen, welches unter Ausnutzung des magneto-optischen Kerreffektes eine möglichst grosse Phasensprungdifferenz und daraus folgend eine möglichst grosse Frequenzaufspaltung der gegensinnig umlaufenden elektro-magnetischen Wellen erzeugt und eine hohe Reflektivität für die verwendete Laserstrahlung besitzt.

Gelöst wird diese Aufgabe durch die im Anspruch 1 angegebenen Merkmale.

Die erfindungsgemässe Lösung hat auch, wenn zusätzlich die Brewster-Bedingung eingehalten ist, den Vorteil, dass ohne weitere Hilfsmittel der gewünschte Polarisationszustand der elektromagnetischen Wellen aufrecht erhalten wird und dass sie einfach herzustellen ist.

Wie oben angedeutet, kann entweder das Prisma selbst oder die angrenzende Schicht aus gyrotropem d.h. den magneto-optischen Kerreffekt bewirkendem Material bestehen oder es können auch beide Materialien gyrotrop sein; auf dieses Material wirkt das Magnetfeld ein, wodurch es zum magneto-optischen Kerreffekt kommt.

Entgegen der Anordnung der eingangs genannten US-A-4 225 239 wird der bei der Erfindung verwendete Reflektor bei dreieckig oder quadratisch angeordnetem Umlaufpfad als Eckreflektor und nicht als zusätzlicher Reflektor benutzt. Die Verwendung von Prismen anstelle von Spiegeln als Reflektoren ist an sich bekannt (US-A-3 545 866).

Wesentlich für die Erfindung ist jedoch, dass ein solches Prisma in ein magneto-optisches Element einbezogen wird, wobei man den Effekt der abgeschwächten Totalreflexion ausnutzt.

Macht man die Schicht, die sich an der Basisgrenzfläche des Prismas befindet, aus gyrotropem Material, so stellt die Forderung, ein gyrotropes Material zu verwenden, das einen gegenüber dem Prismenmaterial wesentlich kleineren Brechungsindex aufweist, eine Beschränkung der Zahl der verwendbaren Stoffe dar, da die meisten gyrotropen Stoffe im allgemeinen einen hohen Brechungsindex aufweisen. Damit ist das Auffinden eines Stoffes, der zudem eine möglichst grosse Faraday-Drehung und eine möglichst geringe Absorption aufweist, zumindest schwierig.

Ausgestaltungen der Erfindung liegen deshalb die Aufgabe zugrunde, die vorgeschlagene Lösung so weiter zu bilden, dass die Forderung nach einem bestimmten Brechungsindex des gyrotropen Materials in ihrer Bedeutung zurücktritt und somit das gyrotrope Material vornehmlich hinsichtlich der sonstigen Forderungen ausgewählt werden kann.

Lösungen hierzu werden in den abhängigen Patentansprüchen 2 bis 7 vorgeschlagen, wobei die an die Basisgrenzfläche des Prismas angrenzende Schicht als Mehrfachschicht ausgebildet wird. Einmal ist die an die Basisgrenzfläche des Prismas direkt angrenzende Teilschicht aus gyrotropem d.h. den magneto-optischen Kerreffekt bewirkendem Material, jedoch ist nun der Brechungsindex dieser Teilschicht gleich oder grösser als der des Prismas und ausserdem schliesst sich noch daran eine zweite Teilschicht aus dielektrischem Material, aber mit einem Brechungsindex kleiner als die Apertur im Prisma [= Prismenbrechzahl * SIN (Auftreffwinkel des Lichtes auf die Prismenbasis)] an. Hier erfolgt die Totalreflexion an der Grenzfläche zwischen gyrotroper Teilschicht und der dielektrischen Teilschicht, wobei das Licht das nun sehr wenig absorbierende gyrotrope Material durchdringt und damit mittels des magnetischen Feldes in der Phase beeinflusst werden kann.

Die zweite Teilschicht kann auch Luft oder Vakuum sein.

Bei einem anderen Lösungsvorschlag grenzt das Prisma mit seiner Basisfläche an eine dielektrische Teilschicht mit kleinerem Brechungsindex an. An diesem liegt die zweite Teilschicht aus den magneto-optischen Kerreffekt bewirkendem Material an, in welche bei geeignet gewählter Dicke der ersten Teilschicht noch ein ausreichender Anteil der bei der Totalreflexion an der Grenzfläche zwischen Prisma und erster Teilschicht entstehenden quergedämpften Welle eintreten kann. Hierdurch wird dann bei geeigneter Magnetisierung der gyrotropen Teilschicht die gewünschte Phasenbeeinflussung erreicht.

Ist hierbei die Brechzahl des gyrotropen Materials kleiner als die Apertur im Prisma, so breitet sich im gyrotropen Material das Licht ebenfalls als quergedämpfte Welle aus. Um die Phasensprungdifferenz zu maximieren, sollte die gyrotrope Teilschicht dicker als die Eindringtiefe der in ihr sich ausbreitenden quergedämpften Welle sein. Diese Eindringtiefe beträgt etwa ein bis zwei Wellenlängen des verwendeten Lichtes.

Ist jedoch die Brechzahl des gyrotropen Materials grösser als die Apertur im Prisma, dann muss die Dicke der gyrotropen Teilschicht so optimiert werden, dass eine maximale Phasensprungdifferenz erreicht wird. Eine weitere Erhöhung der Phasensprungdifferenz kann in diesem Fall noch dadurch erreicht werden, dass eine dritte Teilschicht aus dielektrischem Material an die gyrotrope Teilschicht angeschlossen wird. Eine solche beidseitige Belegung der gyrotropen Schicht mit dielektrischen Schichten kann nun so ausgeführt werden, dass die zur Phasensprungdifferenz führenden Kerrwirkungen bei den Reflexionen an der oberen und unteren Grenzfläche der gyrotropen Schicht sich gegenseitig verstärken.

Anhand der Zeichnung werden Ausführungsbeispiele der Erfindung erläutert. Es zeigen

Fig. 1 ein Ausführungsbeispiel eines erfindungsgemässen Laser-Drehgeschwindigkeitsmessers, der einen Reflektor mit einer einfachen Schicht an der Basisgrenzfläche eines Prismas aufweist,

Fig. 2–4 andere Ausführungsformen für den Reflektor 5 des Drehgeschwindigkeitsmessers der Fig. 1 mit Mehrfachschichten.

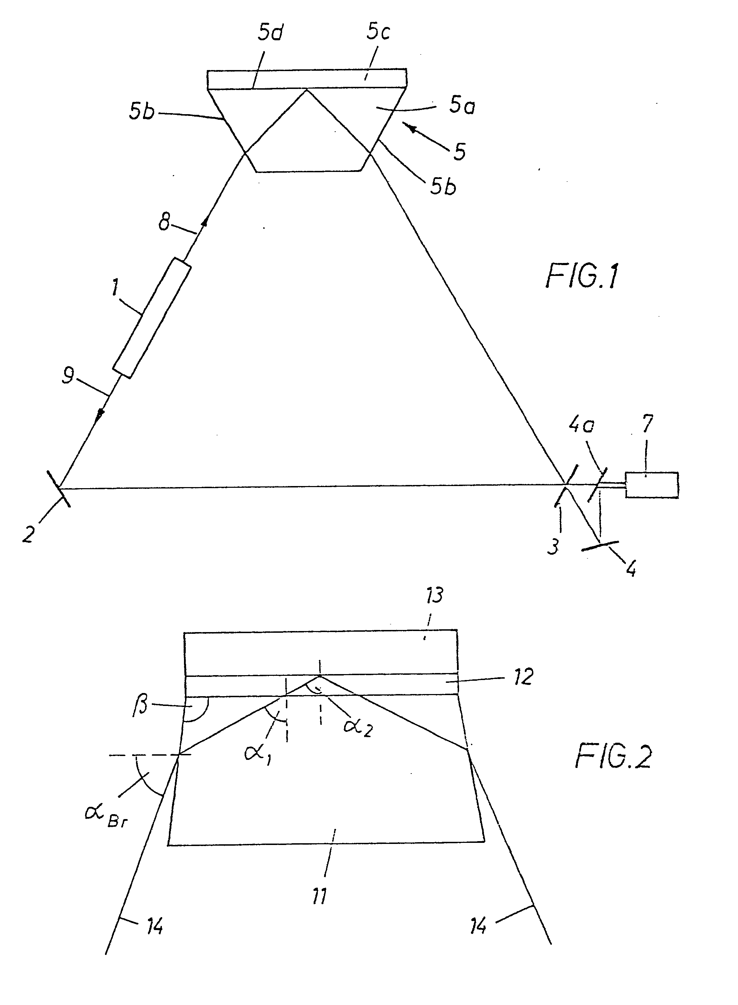

Der in Fig. 1 dargestellte Drehgeschwindigkeitsmesser besteht aus einem optischen Verstärker 1, einem Spiegel 2, einem teildurchlässigen Spiegel 3, einem weiteren Spiegel 4, einem Strahlteiler 4a, dem Reflektor 5 und einem Detektor 7 für die Messung der Frequenzdifferenz der Wellen. Die gegensinnig umlaufenden Laserstrahlen sind mit 8 und 9 bezeichnet. Die Reflektoren 2, 3 und 5 sind so ausgebildet und angeordnet, dass die dargestellten Umlaufpfade zustande kommen. Der Strahl 9 wird am Spiegel 2 reflektiert, vom Spiegel 3 teilreflektiert und der verbleibende Anteil vom Reflektor 5 zum optischen Verstärker 1 zurückgeführt. Der vom Spiegel 3 durchgelassene Teil gelangt zum Detektor 7.

Der Strahl 8 wird im Reflektor 5 umgelenkt, vom teildurchlässigen Spiegel 3 teilweise zum Spiegel 2 umgelenkt und von dort zum optischen Verstärker rückgeführt. Der vom teildurchlässigen Spiegel durchgelassene Anteil wird vom Spiegel 4 auf den Strahlteiler 4a gelenkt und ein Teil davon ebenfalls zum Detektor 7 umgelenkt.

Zur Unterdrückung des Lock-In-Effekts ist der Reflektor 5 in besonderer Weise aufgebaut. Er besteht aus einem Prisma 5a (z.B. aus Strontiumtitanat) eines bestimmten Brechungsindexes $n_1$; dessen Seitenflächen 5b sind so geneigt, dass wegen Erfüllung der Brewster-Bedingung keine Reflexion der auftretenden p-polarisierten Strahlen (8 bzw. 9) erfolgt. Auf die Basisfläche 5d des Prismas ist eine Schicht 5c eines gyrotropen Materials z.B. aus ferromagnetischem Granatmaterial aufgebracht; dieses Material hat einen Brechungsindex $n_2$, der kleiner als die Apertur im Prisma 5a ist. Damit kommt es an der Grenzschicht 5d zwischen Prisma 5a und Schicht 5c zu einer abgeschwächten Totalreflexion der Strahlen. Ein kleiner Teil des Lichts tritt nämlich in die gyrotrope Schicht bis in eine geringe Tiefe ein. Da hierdurch bedingt und wegen des anliegenden Magnetfeldes (senkrecht zur Zeichenebene verlaufend und nicht dargestellt) ein Kerreffekt auftritt, erfahren die Strahlen (9 und 8) unterschiedliche Phasensprünge. Dies ermöglicht es, auch geringe Drehgeschwindigkeiten der Anordnung noch nachzuweisen.

In Fig. 2 ist lediglich ein anders ausgebildeter Reflektor, der den Reflektor 5 der Fig. 1 ersetzen kann, dargestellt. Er besteht aus dem Einkoppelprisma 11 aus dielektrischem Material (Brechzahl $n_1$) und mit dem Winkel $\beta$, der darauf aufgebrachten gyrotropen Schicht 12 (Brechzahl $n_2$) und einer zusätzlichen dielektrischen Schicht 13 (Brechzahl $n_3$).

Die Laserstrahlen 14 fallen an den Seitenflächen des Einkoppelprismas 11 (z.B. aus Glas) unter dem Brewsterwinkel $\alpha_{Br}$ ein und werden wegen der grösseren Dichte ($n_1$) des Prismenmaterials zum Lot hin gebrochen. Sie treffen auf die Schicht 12 (z.B. aus ferromagnetischem Granatmaterial) unter dem Winkel $\alpha_1$ auf, und da der Brechungsindex ($n_2$) des gyrotropen Materials hier grösser ist, werden sie wieder zum Lot hin gebrochen. Danach treffen sie unter dem Winkel $\alpha_2$ auf die Schicht 13, und da das Material (z.B. Kryolith, Mg $F_2$) dieser dielektrischen Schicht einen deutlich kleineren Brechungsindex ($n_3$) aufweist (z.B. nahe 1,0), erfolgt an der Grenzfläche der Schichten 12/13 Totalreflexion. Durch die Magnetisierung der Schicht 12 entsteht eine nichtreziproke Phasenbeeinflussung der sich gegensinnig ausbreitenden Wellen und damit die gewünschte Phasensprungdifferenz.

Oben wurde ein Brechungsindex von nahe 1 für die dielektrische Schicht angegeben. Hierzu sei bemerkt, dass die Schicht 13 auch die Umgebungsluft oder das Umgebungsvakuum sein kann, für die die Bedingung Brechungsindex nahe 1 oder 1 gilt. Es ist jedoch auch eine ausgeprägte Schicht eines festen dielektrischen Materials denkbar. Die Dicke der Schicht 12 des gyrotropen Materials ist so zu wählen, dass die zur Phasensprungdifferenz führenden Kerrwirkungen bei den Reflexionen an der oberen und unteren Grenzfläche der gyrotropen Schicht 12 sich gegenseitig verstärken. Bei der Optimierung ist zu beachten, dass die Absorptionsverluste des Reflektors 5 monoton mit der Dicke $d_2$ der Schicht 12 ansteigen, und die erzielte Phasensprungdifferenz in der Dicke der Schicht 12 periodisch ist.

Für die oben genannten Winkel und Brechzahlen gelten folgende Bemerkungen:

$\alpha_{Br} = \text{arc tg } n_1$

$\beta = \alpha_o + \alpha_{Br}$

$2\alpha_o = $ Strahlumlenkwinkel durch den Reflektor 5 (z.B. 60°)

$\alpha_1 = \beta - \text{arc sin } \dfrac{\sin \alpha_{Br}}{n_1}$

$\alpha_2 = \text{arc sin } \dfrac{n_1 \sin \alpha_1}{n_2}$

$n_3 < n_1 \cdot \sin \alpha_1 = $ Apertur im Prisma

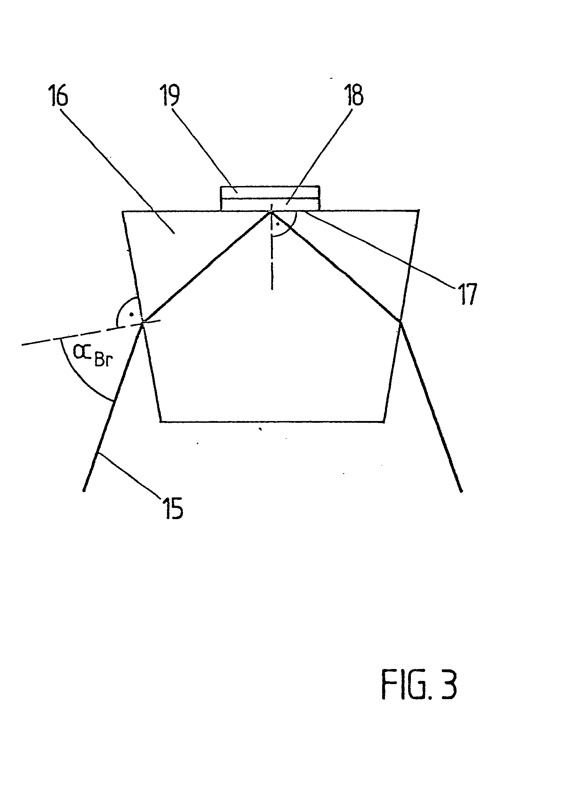

Beim Ausführungsbeispiel der Fig. 3 tritt der Lichtstrahl 15 unter dem Brewsterwinkel $\alpha_{Br}$ zur Vermeidung von Reflexionsverlusten in das Prisma 16 ein, welches aus handelsüblichen Gläsern von geeignetem Brechungsindex wie z.B. Borkronglas Schwerflint, Strontiumtitanat, Zircondioxyd, Quarz o.ä. besteht. Zur Vermeidung von Reflexionsverlusten können die Eintrittsflächen des Prismas auch entspiegelt sein. Der Strahl trifft auf die Grenzfläche 17 zur dielektrischen Schicht 18, wo er bei genügend niedriger Brechzahl des Materials der Schicht 18 total reflektiert und um den gewünschten Winkel abgelenkt wird. Die bei der Totalreflexion auftretende quergedämpfte Welle breitet sich entlang der Grenzfläche 17 aus. Ihre Feldstärke nimmt in der Schicht 18 exponentiell mit dem Abstand von der Grenzfläche 17 ab, greift aber bei geeignet klein gewählter Dicke der Schicht 18 (Grössenordnung 10 nm) noch in die gyrotrope Teilschicht 19 über. Die Dicke der gyrotropen Teilschicht 19 muss dabei in Abhängigkeit vom Verhältnis ihrer Brechzahl zur Apertur im Prisma gewählt werden. Bei geeigneter Magnetisierung des Mediums 19 entsteht durch eine nichtreziproke Phasenbeeinflussung der sich gegensinnig ausbreitenden Wellen die erwünschte Phasensprungdifferenz.

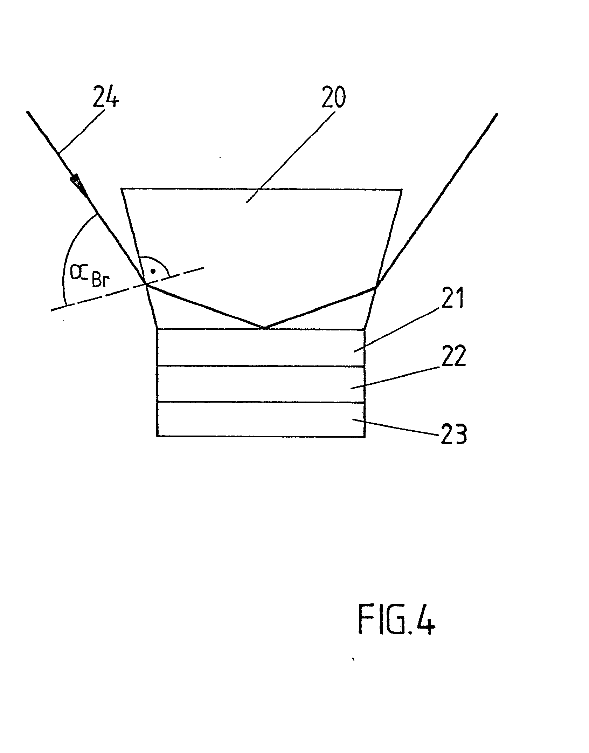

Das Ausführungsbeispiel in Fig. 4 enthält 3 Teilschichten. Der Lichtstrahl 24 tritt auch hier wieder unter dem Brewsterwinkel $\alpha_{Br}$ in das Prisma 20 ein. Die Brechzahl der an die Prismenbasis angrenzenden dielektrischen Schicht ist so klein gewählt, dass an der Grenzfläche zwischen Prisma 20 und dielektrischer Teilschicht 21 Totalreflexion auftritt. Auf die gyrotrope Teilschicht 22 folgt eine weitere dielektrische Teilschicht 23. Der Aufbau der Schichten 21, 22, 23 wird hinsichtlich ihrer Dicken und Brechzahl so gewählt, dass die wegen des Magnetfelds auftretenden Kerrwirkungen bei den Reflexionen an der oberen und unteren Grenzfläche der gyrotropen Schicht sich gegenseitig verstärken.

**Patentansprüche**

1. Laser-Drehgeschwindigkeitsmesser mit
– einem Ringresonator aus mehreren, Licht entlang eines geschlossenen, mehreckigen Strahlengangs ablenkenden Reflektoren (2, 3, 5), von denen einer zur Unterdrückung von Lock-in-Effekten als magneto-optisches Kerr-Element (5) ausgebildet ist,
– einem im Strahlengang des Ringresonators angeordneten Laserverstärker (1) zur Anregung zweier gegensinnig entlang des mehreckigen Strahlengangs umlaufender p-polarisierter Lichtbündel (8, 9),
– Einrichtungen (3) zur Auskopplung eines Bruchteils eines jeden der gegensinnig umlaufenden Lichtbündel,
– Einrichtungen (4, 4a, 7) zur Erzeugung eines der Frequenzdifferenz der ausgekoppelten Bruchteile entsprechenden elektrischen Signals, das für die Drehgeschwindigkeit repräsentativ ist, dadurch gekennzeichnet, dass

– der als magneto-optisches Kerr-Element (5) ausgebildete Reflektor folgende Bestandteile aufweist:

(i) ein Prisma (5a) mit einer Basisgrenzfläche (5d), die von den gegensinnig umlaufenden Lichtbündeln (8, 9) nach dem über jeweils eine Seitenfläche (5d) erfolgenden Eintritt dieser Lichtbündel in das Prisma beaufschlagt ist,

(ii) eine auf der Basisgrenzfläche (5d) des Prismas (5a) angeordnete Schicht (5c) aus einem Material mit einem gegenüber dem Material des Prismas kleineren Brechungsindex,

– wenigstens einer der genannten Bestandteile aus einem den magneto-optischen Kerreffekt bewirkenden Material besteht, und

– das Prisma (5a) so ausgebildet ist, dass der Einfallswinkel der Lichtbündel auf die Schicht (5c) der Bedingung für Totalreflexion genügt.

2. Laser-Drehgeschwindigkeitsmesser nach Anspruch 1, dadurch gekennzeichnet, dass die auf der Basisgrenzfläche des Prismas (11) angeordnete Schicht eine Doppelschicht (12/13) ist, dass die direkt an das Prisma (11) angrenzende Lage (12) der Doppelschicht (12/13) aus dem den magneto-optischen Kerreffekt bewirkenden Material besteht, dass der Brechungsindex des den magneto-optischen Kerreffekt bewirkenden Materials (12) etwa gleich oder grösser als der des Prismas (11) ist und dass die andere, an die Lage (12) aus dem den magneto-optischen Kerreffekt bewirkenden Material angrenzende Lage (13) der Doppelschicht (12, 13) aus dielektrischem Material besteht, das einen kleineren Brechungsindex als das Prismenmaterial und das Material der den magneto-optischen Kerreffekt bewirkenden Lage (12) aufweist, so dass die Totalreflexion an der Grenzfläche zwischen den beiden Lagen der Doppelschicht erfolgt.

3. Laser-Drehgeschwindigkeitsmesser nach Anspruch 2, dadurch gekennzeichnet, dass die andere Lage (13) von der angrenzenden Luft- oder Vakuumumgebung gebildet ist.

4. Laser-Drehgeschwindigkeitsmesser nach Anspruch 1, dadurch gekennzeichnet, dass die auf der Basisgrenzfläche des Prismas (16) angeordnete Schicht eine Doppelschicht (18, 19) ist, dass die direkt angrenzende Lage (18) der Doppelschicht (18, 19) aus dielektrischem Material besteht und gegenüber dem Prismenmaterial einen soviel kleineren Brechungsindex aufweist, dass die Totalreflexion an der Grenzfläche (17) zwischen dem Prisma und der Lage aus dielektrischem Material erfolgt, dass sich an diese dielektrische Lage (18) eine Lage (19) des den magneto-optischen Kerreffekt bewirkenden Materials anschliesst und dass die Dicke der dielektrischen Lage (18) derart klein gewählt ist, dass die bei der Totalreflexion auftretende quergedämpfte Welle noch in die Lage aus dem den magneto-optischen Kerreffekt bewirkenden Material übergreift, die erforderliche Reflektivität jedoch noch erreicht wird.

5. Laser-Drehgeschwindigkeitsmesser nach Anspruch 4, dadurch gekennzeichnet, dass die Brechzahl des den magneto-optischen Kerreffekt bewirkenden Materials kleiner als die durch das Produkt aus dem Brechungsindex des Prismas und dem Sinus des Einfallswinkels der Lichtbündel auf die Basisgrenzfläche gebildete Apertur im Prisma ist.

6. Laser-Drehgeschwindigkeitsmesser nach Anspruch 5, dadurch gekennzeichnet, dass die Dicke der Lage (19) aus dem den magneto-optischen Kerreffekt bewirkenden Material grösser als die Eindringtiefe der quergedämpften Welle ist.

7. Laser-Drehgeschwindigkeitsmesser nach Anspruch 1, dadurch gekennzeichnet, dass die auf der Basisgrenzfläche des Prismas (20) angeordnete Schicht eine Dreifachschicht (21–23) ist, dass die direkt angrenzende Lage (21) der Dreifachschicht (21–23) aus dielektrischem Material besteht und gegenüber dem Prismenmaterial eine soviel kleinere Brechzahl aufweist, dass die Totalreflexion an der Grenzfläche zwischen dem Prisma und der Lage aus dielektrischem Material erfolgt, dass sich an diese erste Lage (21) dielektrischen Materials eine zweite Lage (22) eines den magneto-optischen Kerreffekt bewirkenden Materials anschliesst, dass die Dicke der ersten Lage (21) derart klein gewählt ist, dass die bei der Totalreflexion auftretende quergedämpfte Welle noch in die zweite Lage (22) übergreift, die erforderliche Reflektivität jedoch noch erreicht wird, und dass sich an die zweite Lage (22) eine weitere dritte Lage (23) dielektrischen Materials anschliesst.

8. Laser-Drehgeschwindigkeitsmesser nach Anspruch 7, dadurch gekennzeichnet, dass die Brechzahl des den magneto-optischen Kerreffekt bewirkenden Materials der zweiten Lage grösser als die durch das Produkt aus dem Brechungsindex des Prismas und dem Sinus des Einfallswinkels der Lichtbündel auf die Basisgrenzfläche gebildete Apertur im Prisma (20) ist.

9. Laser-Drehgeschwindigkeitsmesser nach einem der Ansprüche 1 bis 8, dadurch gekennzeichnet, dass das Prisma (5; 11; 16; 20) derart aufgebaut ist, dass beim Lichteintritt an den beiden Seitenflächen (5b) durch Einhaltung der Brewster-Bedingung nahezu keine Reflexion auftritt.

## Claims

1. A laser angular velocity sensor having

– a ring resonator consisting of a plurality of reflectors (2, 3, 5) which deflect light along a closed, polygonal ray path and one of which is constructed in the form of a magneto-optic Kerr element (5) in order to suppress lock-in effects,

– a laser amplifier (1) disposed in the ray path of the ring resonator to stimulate two p-polarized beams of light (8, 9) circulating in opposite directions along the polygonal ray path,

– devices (3) to couple out a fraction of each of the beams of light circulating in opposite directions,

– devices (4, 4a, 7) to produce an electrical signal which corresponds to the frequency difference of the coupled-out fractions and which is representative of the angular velocity, characterised in that

– the reflector constructed in the form of a magneto-optic Kerr element (5) comprises the following components:

(i) a prism (5a) having a base boundary surface (5d) which is acted upon by the beams of light (8, 9) circulating in opposite directions after each of these beams of light has entered the prism through one of the lateral faces (5b),

(ii) a layer (5c) which is disposed on the base boundary surface (5d) of the prism (5a) and which consists of a material having a lower refractive index in comparison with the material of the prism,

– at least one of the said components consists of a material which causes the magneto-optic Kerr effect, and

– the prism (5a) is so constructed that the angle of incidence of the beams of light on the layer (5c) satisfies the condition for total reflection.

2. A laser angular velocity sensor as claimed in Claim 1, characterised in that the layer disposed on the base boundary surface of the prism (11) is a double layer (12, 13), that the layer (12) of the double layer (12, 13) directly adjacent to the prism (11) consists of material causing the magneto-optic Kerr effect, that the refractive index of the material (12) causing the magneto-optic Kerr effect is substantially equal to or higher than that of the prism (11) and that the other layer (13) of the double layer (12, 13), which layer (13) is adjacent to the layer (12) causing the magneto-optic Kerr effect, consists of dielectric material which has a lower refractive index than the prism material and the material of the layer (12) causing the magneto-optic Kerr effect, so that the total reflection occurs at the interface between the two layers of the double layer.

3. A laser angular velocity sensor as claimed in Claim 2, characterised in that the other layer (13) is formed by the adjacent air or vacuum environment.

4. A laser angular velocity sensor as claimed in Claim 1, characterised in that the layer disposed on the base boundary surface of the prism (16) is a double layer (18, 19), that the directly adjacent layer (18) of the double layer (18, 19) consists of dielectric material and has a refractive index which is so much lower in comparison with that the of the prism material that the total reflection occurs at the interface (17) between the prism and the layer of dielectric material, that this dielectric layer (18) is followed by a layer (19) of the material causing the magneto-optic Kerr effect and that the thickness of the dielectric layer (18) is selected so small that the transversely attenuated wave appearing on total reflection still encroaches into the layer of the material which causes the magneto-optic Kerr effect but the necessary reflectivity is still achieved.

5. A laser angular velocity sensor as claimed in Claim 4, characterised in that the refractive index of the material causing the magneto-optic Kerr effect is smaller than the aperture in the prism formed by the product of the refractive index of the prism and the sine of the angle of incidence of the beams of light on the base boundary surface.

6. A laser angular velocity sensor as claimed in Claim 5, characterised in that the thickness of the layer (19) of material causing the magneto-optic Kerr effect is greater than the depth of penetration of the transversely attenuated wave.

7. A laser angular velocity sensor as claimed in Claim 1, characterised in that the layer disposed on the base boundary surface of the prism (20) is a triple layer (21–23), that the directly adjacent layer (21) of the triple layer (21–23) consists of dielectric material and has a refractive index which is so much lower in comparison with that of the prism material that the total reflection occurs at the interface between the prism and the layer of dielectric material, that this layer of dielectric material is followed by a second layer (22) of a material causing the magneto-optic Kerr effect, that the thickness of the first layer (21) is selected so thin that the transversely attenuated wave appearing on total reflection still encroaches into the second layer (22) but the necessary reflectivity is still achieved and that the second layer (22) is followed by a further, third layer (23) of dielectric material.

8. A laser angular velocity sensor as claimed in Claim 7, characterised in that the refractive index of the material of the second layer causing the magneto-optic Kerr effect is greater than the aperture in the prism (20) formed by the product of the refractive index of the prism and the sine of the angle of incidence of the beams of light on the base boundary surface.

9. A laser angular velocity sensor as claimed in any of Claims 1 to 8, characterised in that the prism (5; 11; 16; 20) is constructed in such a manner that, by adhering to the Brewster condition, practically no reflection occurs when light enters the two lateral faces (5b).

**Revendications**

1. Capteur de vitesse de rotation à laser, comprenant

– un résonateur annulaire composé de plusieurs réflecteurs (2, 3, 5) déviant de la lumière le long d'une marche de rayons fermée, polygonale, dont l'un est réalisé comme un élément magnéto-optique de Kerr (5) pour la suppression d'effets de blocage,

– un amplificateur laser (1) disposé dans la marche de rayons du résonateur annulaire pour l'excitation de deux faisceaux lumineux polarisés p (8, 9) circulant en sens inverse le long de la marche de rayons polygonale,

– des dispositifs (3) pour faire sortir de la marche de rayons une fraction de chacun des faisceaux lumineux circulant en sens inverse et

– des dispositifs (4, 4a, 7) pour produire un signal électrique correspondant à la différence de fréquence des fractions sorties, qui est représentatif de la vitesse de rotation,
caractérisé en ce que

— le réflecteur réalisé comme élément de Kerr (5) présente les constituants suivants:

(i) un prisme (5a) possédant une face limite de base (5d), sur laquelle tombent les faisceaux lumineux (8, 9) circulant en sens inverse, après l'entrée de ces faisceaux lumineux dans le prisme à travers des faces latérales séparées (5b) et

(ii) une couche (5c), disposée sur la face limite de base (5d) du prisme (5a), formée d'un matériau ayant un plus petit indice de réfraction que le matériau du prisme,

— au moins l'un de ces constituants est formé d'un matériau produisant l'effet de Kerr et

— le prisme (5a) est réalisé de manière que l'angle d'incidence des faisceaux lumineux sur la couche (5c) remplisse la condition pour l'obtention d'une réflexion totale.

2. Capteur de vitesse selon la revendication 1, caractérisé en ce que la couche disposée sur la face limite de base du prisme (11) est une couche double (12/13), que la couche (12) directement contiguë au prisme (11) de la couche double (12/13) est formée du matériau produisant l'effet de Kerr, que l'indice de réfraction de ce matériau (12) est égal ou supérieur à celui du matériau du prisme (11) et que l'autre couche (13), contiguë à la couche (12) du matériau produisant l'effet de Kerr de la couche double (12/13), est en matériau diélectrique ayant un plus petit indice de réfraction que le matériau du prisme et le matériau de la couche (12) produisant l'effet de Kerr, de sorte que la réflexion totale se produit à la face limite entre les deux couches de la couche double.

3. Capteur de vitesse selon la revendication 2, caractérisé en ce que l'autre couche (13) est formée par l'air ou le vide environnant.

4. Capteur de vitesse selon la revendication 1, caractérisé en ce que la couche disposée sur la face limite de base du prisme (16) est une couche double (18/19), que la couche (18) directement contiguë au prisme de la couche double (18/19) est en matériau diélectrique et possède un indice de réfraction qui est inférieur à celui du matériau du prisme au point que la réflexion totale se produit à la face limite (17) entre le prisme et la couche de matériau diélectrique, que cette couche (18) de matériau diélectrique est suivie d'une couche (19) du matériau produisant l'effet de Kerr et que l'épaisseur de la couche diélectrique (18) est choisie si faible que l'onde amortie transversalement apparaissent à la réflexion totale pénètre encore dans la couche du matériau produisant l'effet de Kerr, mais que la réflectance requise est encore atteinte.

5. Capteur de vitesse selon la revendication 4, caractérisé en ce que l'indice de réfraction du matériau produisant l'effet de Kerr est plus petit que l'ouverture dans le prisme, formée par le produit de l'indice de réfraction du prisme et du sinus de l'angle d'incidence des faisceaux lumineux sur la face limite de base du prisme.

6. Capteur de vitesse selon la revendication 5, caractérisé en ce que l'épaisseur de la couche (19) du matériau produisant l'effet de Kerr est plus grande que la profondeur de pénétration de l'onde amortie transversalement.

7. Capteur de vitesse selon la revendication 1, caractérisé en ce que la couche disposée sur la face limite de base du prisme (20) est une couche triple (21–23), que la couche (21) directement contiguë au prisme de la couche triple (21–23) est en matériau diélectrique et possède un indice de réfraction qui est inférieur à celui du matériau du prisme au point que la réflexion totale se produit à la face limite entre le prisme et la couche de matériau diélectrique, que cette première couche (21) de matériau diélectrique est suivie d'une deuxième couche (22) d'un matériau produisant l'effet de Kerr, que l'épaisseur de la première couche (21) est choisie si faible que l'onde amortie transversalement apparaissant à la réflexion totale pénètre encore dans la deuxième couche (22), mais que la réflectance requise est encore atteinte, et que la deuxième couche (22) est suivie d'une troisième couche (23) qui est également en matériau diélectrique.

8. Capteur de vitesse selon la revendication 7, caractérisé en ce que l'indice de réfraction du matériau produisant l'effet de Kerr de la deuxième couche est plus grand que l'ouverture dans le prisme (20), formée par le produit de l'indice de réfraction du prisme et du sinus de l'angle d'incidence des faisceaux lumineux sur la face limite de base du prisme (20).

9. Capteur de vitesse selon une des revendications 1 à 8, caractérisé en ce que, par suite du respect de la condition de Brewster, il n'y a presque pas de réflexion à l'entrée de la lumière sur les deux faces latérales (5b).

FIG.1

FIG.2

FIG. 3

FIG.4